Europäisches Patentamt

(19) European Patent Office

Office européen des brevets

(11) Publication number: 0 162 601
A2

(12) **EUROPEAN PATENT APPLICATION**

(21) Application number: 85302878.5

(22) Date of filing: 24.04.85

(51) Int. Cl.⁴: C 23 C 26/02
B 23 K 35/24

(30) Priority: 12.05.84 JP 93901/84

(43) Date of publication of application:
27.11.85 Bulletin 85/48

(84) Designated Contracting States:
BE DE FR GB IT NL SE

(71) Applicant: DAIKI ENGINEERING CO., LTD.
16-1, Shimbashi 2-chome Minato-ku
Tokyo(JP)

(71) Applicant: Hashimoto, Koji
25-5, Shogen 2-chome
Izumi-shi Miyagi-ken(JP)

(72) Inventor: Hashimoto, Koji
25-5, Shogen 2-chome
Izumi-shi Miyagi-ken(JP)

(72) Inventor: Kumagai, Naokazu
1-9-5, Kita Matsudo
Matsudo-shi Chiba-ken(JP)

(72) Inventor: Asami, Katsuhiko
5-3, Taihaku 2-chome
Sendai-shi Miyagi-ken(JP)

(74) Representative: Pendlebury, Anthony et al,
Page, White & Farrer 5 Plough Place New Fetter Lane
London EC4A 1HY(GB)

(54) Formation of alloy layer on a metal substrate.

(57) Methods for preparation of overlaid uniform metal layers
of prescribed compositions and thicknesses bonded tightly
to the substrate metals. The methods consist of previously
coating the substrate metal surface with metal layers and
irradiation treatment by high energy density beams.

0162601

## FORMATION OF ALLOY LAYER ON A METAL SUBSTRATE

The present invention relates to a method of forming an alloy layer on a metal substrate and in particular to a method for the preparation of overlaid uniform metal layers of prescribed compositions and thicknesses on conventional metallic materials.

A number of characteristics required for metallic materials in particular applications must be possessed not by the metallic materials themselves but only by their surfaces. Overlaid metal layers providing such characteristics have so far been prepared by melt deposition, electrodeposition, electroless deposition, diffusion coating, vapor deposition, vacuum deposition, etc. However, the overlaid layers prepared by these methods are mostly single elements and the overlaid metals are not widely varied. Furthermore, the overlaid layers thus prepared are often defective and are often not uniform. Also, the bonding between the overlaid layer and the substrate metal is often insufficient. It is, therefore, difficult to expect high strength in combination with considerable toughness, high corrosion resistance and special surface activities for the overlaid layers thus prepared.

The present invention provides a method of forming an alloy layer on a metallic substrate, the method comprising the steps of:-
    (a) coating the substrate with a metallic layer;
    (b) scanning an area of the layer with a high energy density beam of
        radiation so as to melt the layer in the scanned area; and
    (c) allowing the melt to solidify to form an alloy from the metallic
        layer.

The high energy density beam may be a laser beam, electron beam or other high energy density beam, the beam being able to melt locally surface metal layers by controlling the energy density and irradiation time. The substrate metal surface may be adhesively covered with metals of prescribed compositions to give a prescribed average composition even if the metals so applied are inhomogeneous multiple phases or multiple layers. Irradiation of the covered metals with a high energy density beam can lead to melting of the metals to a prescribed depth, together with a portion of the substrate metal if desired, and to the formation of a uniform alloy melt of a prescribed composition. Since in the preferred method the volume of the alloy melt is very small, when the irradiation with the high energy density beam is stopped, the heat of the alloy melt is rapidly absorbed by the surrounding solid, and hence a homogeneous solid alloy layer is formed due to the consequential quenching of the uniform composition of the melt.

The present inventors utilized the above mentioned characteristics of the high energy density beams and succeeded in preparing overlaid metal layers of prescribed compositions and thicknesses which were tightly bonded to the substrate metals.

The preparation of overlaid uniform metal layers of complicated compositions by irradiation with high energy density beams preferably requires initial coating of the substrate metals with metal layers or metal sheets before the irradiation treatment. The average compositions of the metal layers or metal sheets so initially coated should be chosen in such a way that the resultant overlaid uniform metal layers possess the prescribed compositions after the beam irradiation treatment which results in homogenization by melting and alloying either only the metal layers or sheets or both the metal layers or sheets and a portion of the substrate metals.

According to a first embodiment of the present invention the metal layer with which the substrate metal is initially coated by various procedures such as metal powder coating and various kinds of deposition processes, is not tightly bonded to the substrate metal and hence the high energy density beam must be irradiated so as to melt a portion of the substrate metal together with the metal layer so as to form an overlaid uniform metal layer which is bonded tightly to the substrate metal.

On the other hand, when the metal layer or other metal sheet of a prescribed composition is initially bonded tightly to the substrate metal by heat treatment prior to the beam irradiation, it is not always necessary that the beam irradiation melts a portion of the substrate metal together with the metal sheet or metal layer unless alloying the metal sheet or metal layer with a portion of the substrate metal is required. Accordingly, in a second embodiment of the present invention, prior to the irradiation treatment by the high energy density beam the metal layer or metal sheet placed on the substrate metal is heat-treated in a desired atmosphere, which can include vacuum and inert gases, at around the melting point of the metal layer or metal sheet so as to bond the metal layer or metal sheet to the substrate metal. The high energy density beam may be irradiated on to the specimen, in which the metal layer or metal sheet is tightly bonded to the substrate metal, during movement of the specimen or the beam. The irradiation treatment may be carried out under the conditions in which the power of the high energy density beam and the rate of the movement of the specimen or beam may be controlled. Those conditions control the melt depth and hence the alloy composition and accordingly can provide rapid solidification of the homogeneous alloy melt by heat absorption by the surrounding cold solid.

The formation of the bonding between the metal layer or metal sheet to the substrate metal by the heat treatment is dependent upon the wettability of the substrate metal with the metal layer or metal sheet, the mutual solubility of the metal layer or metal sheet and the substrate metal, etc. Hence, the melting of the metal layer or metal sheet by heat treatment does not always result in bonding between the metal layer or metal sheet and the substrate metal. Furthermore, the formation of an alloy layer at the interface between the metal layer or metal sheet and the substrate metal by the heat treatment results sometimes in a thermal discontinuity at the interface which prevents self quenching after the beam melting. Accordingly, in a third embodiment of the present invention, before the metal layer or metal sheet is placed on the substrate metal the substrate metal is covered with a metal or metals capable of bonding easily to both the substrate metal and the metal layer or metal sheet by heat treatment. Subsequently the metal layer or metal sheet is bonded tightly to the substrate metal by heat treatment and finally the irradiation treatment by the high energy density beam is carried out to prepare the overlaid uniform metal layer which is bonded tightly to the substrate metal. The initial application of the metal or metals can be carried out by various procedures such as melt deposition, electrodeposition, electroless deposition, vapor deposition, etc.

In addition, the metal sheets which are placed on the substrate metals are sometimes composed of complicated compositions. It is often difficult to prepare the metal sheets of complicated compositions by conventional processes such as casting, forging and rolling. In such a case, the metal sheets can be prepared directly from the respective liquid alloys by rapid solidification techniques in which the liquid alloys are impinged on the outer or inner surface of a rapidly rotating wheel. Thin metal foils are easily formed by rapid solidification of the liquid alloys which extends the solid solubility of the components in the alloys.

The preferred methods of the present invention consisting of previously coating the substrate metal surfaces with the metal layers or metal sheets and subsequent irradiation treatment by a high energy density beam which provides overlaid uniform metal layers which are bonded tightly to the substrate metals. In particular, in the preferred methods, the volume of the melt formed at the moment of irradiation by the high energy density beam is very small and the heat of the melt is rapidly absorbed by the surrounding cold solid. The preferred methods, therefore, can provide the preparation of overlaid amorphous metal layers which are bonded tightly to crystalline metals, if the surface compositions are suitable for vitrification by rapid quenching from the liquid state.

The preferred methods of the present invention will be further illustrated by certain examples which are provided only for purpose of illustration and are not intended to limit the scope of the present invention.

## Example 1

This is an example of the formation of an overlaid ferritic stainless steel layer on a mild steel. A liquid paraffin-coated mild steel rod of 20 mm diameter was covered with chromium powder. The rod was rotated by a lathe at 100 rpm and was shifted in a direction along the length of the rod by 90 μm during each rotation. During this movement at 300 W·$CO_2$ laser beam was irradiated on the outer surface of the rod, the beam diameter on the surface of the rod being 100 μm. This method leads to homogeneous melting of the chromium powder and a portion of the substrate mild steel and to the formation of an overlaid 130 μm thick 30 Cr ferritic stainless steel layer on the mild steel.

## Example 2

In this example an overlaid austenitic stainless steel layer was formed on a mild steel plate. A 10 mm thick mild steel plate was electroplated successively with 15 μm thick nickel and 10 μm thick chromium. The double plated mild steel specimen was placed on an x-y table, and a 300 W·$CO_2$ laser beam, whose diameter on the specimen surface was 100 μm, was irradiated onto the plated surface during the movement of the specimen along the x-axis at a rate of 110 mm/sec. After laser irradiation from one end to the other end of the specimen along the x-axis, the specimen was shifted 100 μm along the y-axis and the direction of the specimen movement along the x-axis was reversed. The repetition of this procedure, that is, laser irradiation of the reciprocating specimen, resulted in homogeneous melting of the chromium, the nickel and a portion of the substrate mild steel and hence in the formation of an overlaid 120 μm thick Fe-23CR-14Ni

...tic stainless steel layer on the mild steel.

## Example 3

In this example an overlaid amorphous Ni-Fe-Cr-P alloy layer was preprared on a mild steel rod. A 50 $\mu$m thick Ni-25 at%P alloy was first electroplated on a mild steel rod of 20 mm diameter and subsequently a 10 $\mu$m thick chromium layer was further electroplated over the alloy layer. During rotation of the rod with a lathe at 440 rpm, a 400 W·$CO_2$ laser beam whose diameter on the rod surface was 100 $\mu$m was irradiated over the surface of the plated rod, and the rod was shifted in a direction along the length of the rod by about 70 $\mu$m during each rotation. The laser irradiation treatment led to homogeneous melting of the chromium, the Ni-25at%P alloy and the mild steel surface to a depth of 10 $\mu$m. The melting and subsequent self quenching resulted in the formation of an overlaid amorphous Ni-14at% Fe-14at%Cr-18at%P alloy layer bonded tightly to the substrate mild steel.

## Example 4

In this example an overlaid amorphous Fe-Cr-P-C alloy layer was prepared on a mild steel plate. A mixture of 50wt% iron carbide, 40 wt% iron phosphide and 10 wt% chromium was powdered by crushing. A liquid paraffin coated mild steel plate of 10 mm thickness was covered with the powder and was placed on an x-y table. A 200 W·$CO_2$ laser beam whose diameter on the specimen surface was 100 $\mu$m was irradiated during movement of the specimen along the x-axis at 436 mm/sec. After laser irradiation from one end to the other end of the specimen along the x-axis the specimen was shifted about 70 $\mu$m along the y-axis and the direction of movement of the specimen was reversed. The repetition of this procedure, that is, the laser irradiation to the reciprocating specimen, resulted in the homogeneous melting and vitrification of the entire irradiated surface of the specimen and hence in the preparation of an overlaid 50 $\mu$m thick amorphous Fe-8at%Cr-13at%P-7at%C alloy layer which was bonded tightly to the substrate mild steel.

## Example 5

In this example an overlaid corrosion-resistant amorphous Fe-Cr-Ni-P-C alloy layer was prepared on a conventional nickel metal plate. Cast alloys were prepared from iron phosphide, iron carbide, iron and chromium by induction melting, and then the rotating wheel method was used to obtain alloy sheets of 1-5 mm width and 20-30 μm thickness from the cast alloy. The sheets were spot-welded to the surface of a conventional nickel melt plate of 20 mm width, 60 mm length and 1 or 5 mm thickness. After a quartz tube in which the specimens were placed was evacuated, it was inserted into a furnace at a prescribed temperature for a short time so as to melt the metal sheets and to spread the melts uniformly on the substrate nickel metal. Then the specimens were quenched in water or a silicon oil. By this procedure, overlaid crystalline Fe-Cr-P-C alloy layers bonded tightly to the substrate nickel were prepared. The overlaid layers were alloyed with a portion of the substrate nickel. Since the overlaid layers consisted of multiple phases with a brittle nature and had poor corrosion resistance, the laser irradiation treatment was carried out to vitrify the overlaid metal layers. The specimens were placed on the x-y table and moved along the x-axis at 400 mm/sec. During the movement of the specimen along the x-axis a 500 W·CO$_2$ laser beam was focused on the specimen surface. After laser irrdiation from one end to the other end of the specimen along the x-axis the specimen was shifted about 75 μm along the y-axis and the direction of the specimen movement along the x-axis was reversed. The repetition of this procedure, that is, the laser irradiation of the reciprocating specimens, led to the preparation of overlaid uniform amorphous Fe-Cr-Ni-P-C alloy layers with extremely high corrosion resistance and high mechanical strength together with considerable toughness. These layers were tightly bonded to the substrate nickel metal.

## Example 6

The overlaid amorphous Fe-Cr-Ni-P-C alloy layers described in example 5 were prepared on a conventional mild steel. Various Fe-Cr-P-C alloy sheets as described in example 5 were not tightly bonded directly to

the mild steel by the heat treatment process. Instead, the substrate mild steel was initially covered with 1-3 μm thick nickel plating, and then the Fe-Cr-P-C alloy sheets were bonded to the nickel-plated mild steel by the same procedure as described in example 5. The laser irradiation treatment was carried out similarly to that used in example 5 and led to the preparation of overlaid uniform amorphous Fe-Cr-Ni-P-C alloy layers with extremely high corrosion resistance and high mechanical strength in combination with considerable toughness which were bonded tightly to the substrate mild steel.

Example 7

In this example overlaid amorphous Pd-P alloy layers were prepared on a conventional nickel metal. Cast alloys were prepared by induction melting of previously made palladium phosphides and palladium metal. The rotating wheel method was used to prepare various Pd-P alloy sheets of 5 mm width and 10 μm thickness from the cast alloys. The alloy sheets were spot-welded on a conventional nickel melt sheet of 20 mm width, 60 mm length and 2 mm thickness. After a quartz tube in which the specimens were placed was evacuated, it was inserted into a furnace at a prescribed temperature for a short time. When the alloy sheets were melted they were alloyed with a portion of the substraate nickel metal and spread uniformly over the substrate nickel metal. Subsequently they were quenched in water or in a silicon oil. The resultant overlaid crystalline Pd-Ni-P alloy layers were bonded tightly to the substrate nickel but they consisted of two phases of palladium phospide and palladium metal and hence were brittle. Accordingly they were vitrified by the laser irradiation treatment to prepare corrosion resistant metal layers with high mechanical strength. The specimens were placed on the x-y table and were moved at 100-800 mm/sec along the x-axis. During the movement along the x-axis, 300-500 W-$CO_2$ laser beams were focused on the specimen surfaces. After laser irradiation from one end to the other end of the specimens along the x-axis the specimens were shifted 75-200 μm along the y-axis and the direction of the specimen movement was reversed. The repetition of this procedure, that is, laser irradiation of the reciprocating specimens, resulted in the formation of overlaid amorphous Pd-Ni-P alloy layers with high mechanical strength in combination with considerable toughness which were bonded tightly to the substrate nickel metal.

Example 8

In this example overlaid amorphous Pd-Ni-Ti-P alloy layers were prepared on a conventional titanium metal. It was attempted to bond various Pd-P alloys as described in example 7 to the conventional titanium by the heat treatment which is described in example 7. It was however, difficult to prevent alloying of the Pd-P alloys with large amounts of the titanium due to the heat treatment. This decreased the glass-forming ability of the metal sheets. Hence, about 1 μm thick nickel was initially plated on to the substrate titanium metal and then the same procedures as used in example 7 were applied. By this method, overlaid uniform and high strength amorphous Pd-Ni-Ti-P alloy layers were formed, which were bonded tightly to the substrate titanium metal.

As can be seen from the examples the present invention provides the preparation of overlaid uniform and homogeneous layers having specific characteristics and which are bonded tightly to the substrate metals. In particular, the preparation of overlaid amorphous alloy layers, which is quite difficult by conventional methods, can be performed.

CLAIMS:

1.    A method of forming an alloy layer on a metallic substrate, the method comprising the steps of:-
   (a) coating the substrate with a metallic layer;
   (b) scanning an area of the layer with a high energy density beam of radiation so as to melt the layer in the scanned area; and
   (c) allowing the melt to solidify to form an alloy from the metallic layer.

2.    A method according to Claim 1, wherein the beam also melts the surface of the substrate which is coated by the layer.

3.    A method according to Claim 1 or Claim 2, wherein between steps (a) and (b), the coated substrate is heat treated at a temperature near the melting point of the metallic layer and then cooled so as to bond the metallic layer to the substrate.

4.    A method according to Claim 1, Claim 2 or Claim 3, wherein the layer is a powder.

5.    A method according to Claim 1, Claim 2 or Claim 3, wherein the layer is a laminar structure comprising at least two superposed layers of metallic material.

6.    A method according to any foregoing claim, wherein the metallic layer is composed of an elemental metal, a metallic alloy, a metal compound, a mixture of one or more metal compounds with one or more metals or metallic alloys, or two or more layers of metal or metallic alloy.

7.    A method according to any foregoing claim, wherein the alloy layer formed on the substrate is amorphous.

8.    A method for the preparation of overlaid uniform metal layers of prescribed compositions and thicknesses, which are bonded tightly to substrate metals, characterized in that:

(a) substrate metal surfaces are previously coated with metal layers by using one or more of the following procedures; metal powder coating with and without binders possessing or capable of possessing proper adhesiveness, melt deposition, electrodeposition, electroless deposition, diffusion coating, vapor deposition, ion plating and spray coating;

(b) high energy density beams including laser and electron beams are irradiated to specimen surfaces of the metal layer-covered substrates during movement of the specimens or beams, in which the movement controls the time of irradiation to individual surface site and the depth of metals and hence controls the compositions of the overlaid metal layers;

(c) irradiation of the high energy density beams melts simultaneously the metal layers and the prescribed depth of the substrate metals thereby leading to alloying the metal layers with the substrate metals as well as homogenization and to subsequent self quenching by the surrounding solid and hence to the preparation of overlaid uniform metal layers of prescribed compositions and thicknesses, which are tightly bonded to the substrate metals; simultaneous melting both the metal layers and the prescribed depth of the substrate metals is required due to the following reason; the metal layers prepared by one or more of the procedures described in (a) are not always tightly bonded to the substrate metals, and therefore the beam irradiation to melt only the metal layers results in poor absorption of the heat of the metal layers by the substrate metals and gives rise to rapid evaporation and exfoliation of the metal layers along with the formation of round-shaped alloy melt by the surface tension of the liquid.

9.   A method for the preparation of overlaid uniform metal layers of prescribed compositions and thicknesses, which are bonded tightly to substrate metals, characterized in that:

(a) substrate metal surfaces are previously coated with metals by heat treatment in various atmospheres including vacuum and inert gases after metal sheets of the prescribed compositions are placed on the substrate metals or after the substrate metal surfaces are covered with the metal layers prepared by the procedures described in Claim 1 (a);

(b) high energy density beams including laser and electron beams are irradiated to specimen surfaces of the metal layer or metal sheet-coated substrates during movement of the specimens or beams, in which the movement controls the time of irradiation to individual surface site and the depth of metals and hence controls the compositions of the overlaid metal layers;

(c) the beam irradiation melts either only the previously coated metals or both the previously coated metals and a portion of the substrate metals, and subsequent self quenching by the surrounding solid results in the preparation of overlaid uniform metal layers of prescribed compositions and thicknesses, which are bonded tightly to the substrate metals, because evaporation and exfoliation of the previously coated metals during the beam irradiation do not occur due to formation of tight bond between the substrate metals and the metal sheets or metal layers by the heat treatment described in (a); it is therefore not always necessary for the preparation of overlaid homogeneous metal layers that irradiation of high energy density beams melts a portion of the substrate metals together with the metal sheets or metal layers; hence the overlaid uniform metal layers bonded tightly to the substrate metals can be formed by melting the metal sheets or metal layers by irradiation of high energy density beams, and a portion of the substrate metals along with the metal sheets or metal layers is melted for alloying the metal sheets or metal layers with the substrate metals.

10.   A method as described in Claim 9, wherein before placing the metal sheets of prescribed compositions on the substrate metals or covering the substrate metal surfaces with the metal layers prepared

0162601

by the procedures as described in Claim 1 (a), the substrate metals are coated with a metal or metals capable of bonding easily to both the substrate metals and the metal sheets or metal layers during the heat treatment described in Claim 2 (a).